# FASCICULE DE BREVET EUROPEEN

(11) **EP 4 489 090 B1**
(45) Date de publication et mention de la délivrance du brevet: **01.04.2026**
(21) Numéro de dépôt: 24186845.4
(22) Date de dépôt: 05.07.2024
(51) Int. Cl.: H01M 4/04, H01M 10/04

(54) **SYSTÈME DE FABRICATION EN CONTINU D'UNE ÉLECTRODE ET PROCÉDÉ ASSOCIÉ**
SYSTEM ZUR KONTINUIERLICHEN HERSTELLUNG EINER ELEKTRODE UND VERFAHREN DAFÜR
SYSTEM FOR CONTINUOUSLY MANUFACTURING AN ELECTRODE AND ASSOCIATED METHOD

(30) Priorité: 07.07.2023 FR 2307285
(43) Date de publication de la demande: 08.01.2025
(73) Titulaire: Ampere SAS, 92100 Boulogne-Billancourt (FR)
(72) Inventeur: HERVE, Pauline, 78084 Guyancourt Cedex (FR); LOMBARD, Tristan, 78084 Guyancourt Cedex (FR)
(74) Mandataire: Renault Group

(56) Documents cités:
- JP-A- H09 106 814
- US-A1- 2010 247 993
- US-A1- 2019 081 317

## Description

### Domaine technique

La présente invention concerne un procédé de fabrication en continu d'une électrode, par exemple pour batterie métal-ion.

### Techniques antérieures

Une batterie métal-ion comporte deux électrodes, à savoir une électrode positive et une électrode négative, appelées par abus de langage respectivement cathode et anode, séparées par un séparateur isolant électriquement mais conducteur ioniquement. Le séparateur est imprégné d'un électrolyte liquide contenant des ions lithium, dans le cas d'une batterie lithium-ion.

Les électrodes positives et négatives, sont classiquement fabriquées par enduction, en déposant en continu une encre contenant un matériau actif, un solvant, un liant et éventuellement un additif électriquement conducteur, sur les collecteurs de courant.

Classiquement, on utilise un rouleau d'entraînement associé à un rouleau à lame doseuse pour réaliser l'enduction sur une face du collecteur. Le document 2002JP-0073467 divulgue un procédé d'enduction d'encre par gravité à l'aide d'un rouleau à lame doseuse, aussi appelé « knife » ou « comma bar » en anglais. L'inconvénient de ce procédé est qu'il n'est pas possible de réaliser simultanément une enduction des deux faces du collecteur. En effet, pour obtenir une couche d'enduction sur les deux faces il est nécessaire d'effectuer d'abord l'enduction sur une première face, puis de répéter toutes les étapes du procédé en inversant le sens du collecteur pour réaliser l'enduction sur la deuxième face.

Afin d'optimiser le temps de réalisation par une enduction simultanée des deux faces d'un collecteur, la technique la plus couramment utilisée est la technique dite d'enduction avec une fente filière (ou « slot die » en anglais).

Le document US 905 06 18 - B2 illustre cette technologie. Bien que le procédé décrit dans ce document permette d'obtenir une couche d'enduction sur les deux faces en une seule étape, il utilise deux sources d'enduction dédiées, disposées chacune sur une face opposée du collecteur. Cette multiplication des sources d'enduction dédiées augmente la complexité du système de fabrication ainsi que les dépenses en énergie nécessaires à son opération. Le document US2010/247993 divulgue un procédé de fabrication en continu d'une électrode.

### Exposé de l'invention

L'invention a pour but de diminuer le nombre de sources d'enduction dédiées utilisées pour la fabrication d'électrodes tout en permettant la réalisation continue et simultanée d'une couche d'enduction sur chacune des deux faces opposées d'un collecteur de courant.

L'invention a pour objet un procédé de fabrication en continu d'une électrode comprenant les étapes suivantes réalisées simultanément et en continu :
- défilement continu d'un collecteur de courant, ledit collecteur de courant ayant une première face et une seconde face opposée à la première face,
- dépôt en continu d'une encre sur la première face du collecteur de courant depuis un réservoir d'encre, ladite encre comprenant au moins un solvant et un matériau actif,
- dépôt en continu d'encre sur la seconde face du collecteur de courant,
- séchage en continu de l'encre déposée pour éliminer le solvant, par un dispositif de séchage.

Selon ce procédé, le dépôt d'encre sur la seconde face du collecteur est réalisé par une enduction avec de l'encre déposée sur la première face du collecteur.

Un tel procédé permet d'utiliser une même formulation pour les deux faces du collecteur à partir d'une même production d'encre et d'une même source d'enduction dédiée, ce qui favorise une meilleure homogénéité de la production.

Un tel procédé permet de diminuer le nombre de sources d'enduction dédiées réduisant la complexité du système de fabrication ainsi que les dépenses en énergie nécessaires à son opération.

Selon une caractéristique, l'enduction de la seconde face B est réalisée de manière à transférer la moitié de l'encre déposée sur la première face d'un premier segment de collecteur à la deuxième face d'un deuxième segment de collecteur situé en aval du premier segment dans le sens de défilement du collecteur.

Par exemple, l'enduction de la seconde face est réalisée par un passage simultané des segments du collecteur entre deux rouleaux espacés d'une distance correspondant à la somme des épaisseurs des segments, d'une épaisseur de couche d'encre séchée de la première face du deuxième segment et d'une demi-épaisseur de couche d'encre déposée sur la première face du premier segment.

Avantageusement, les deux segments du collecteur forment un angle de sortie des deux rouleaux allant de 5 à 45 degrés. Un tel angle de sortie facilite le décollement des deux segments du collecteur et permet de contenir l'écartement entre les deux segments en vue de leur séchage dans un même dispositif de séchage.

Avantageusement, le dépôt d'encre sur la première face du collecteur de courant est réalisé par enduction à l'aide d'une lame doseuse. Une telle enduction est sobre en termes de consommation énergétique et permet d'éviter des pertes d'encre engendrées par l'utilisation de systèmes de pompage requis par des technologies telles que le slot die.

Par exemple, la couche d'encre déposée a une épaisseur allant de 50 µm à 400 µm.

Selon une autre caractéristique, le dispositif de séchage se situe en aval des zones de dépôt d'encre, dans le sens de défilement du collecteur.

Par exemple, l'encre a une viscosité allant de 0,001 Pa.s à 10 Pa.s.

Selon un autre aspect, l'invention a pour objet un système de fabrication en continu d'une électrode comprenant :
- des moyens de défilement continu d'un collecteur de courant, ledit collecteur de courant ayant une première face et une seconde face opposée à la première face,
- des moyens de dépôt en continu d'une encre sur la première face du collecteur de courant depuis un réservoir d'encre, ladite encre comprenant au moins un solvant et un matériau actif,
- des moyens de dépôt en continu d'encre sur la seconde face du collecteur de courant,
- un dispositif de séchage en continu de l'encre déposée sur le collecteur de courant pour éliminer le solvant.

Le dépôt d'encre sur la seconde face du collecteur est réalisé par une enduction avec de l'encre déposée sur la première face du collecteur.

De préférence, le dispositif de séchage comprend un unique four associé à un dispositif d'extraction d'air.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1] illustre schématiquement un système de fabrication en continu d'une électrode selon un mode de réalisation de l'invention ;
[Fig.2] est une vue de détail du système de la [Fig.1] ; et
[Fig.3] illustre un organigramme d'un procédé de fabrication en continu d'une électrode selon un mode de réalisation de l'invention.

### Exposé détaillé d'au moins un mode de réalisation

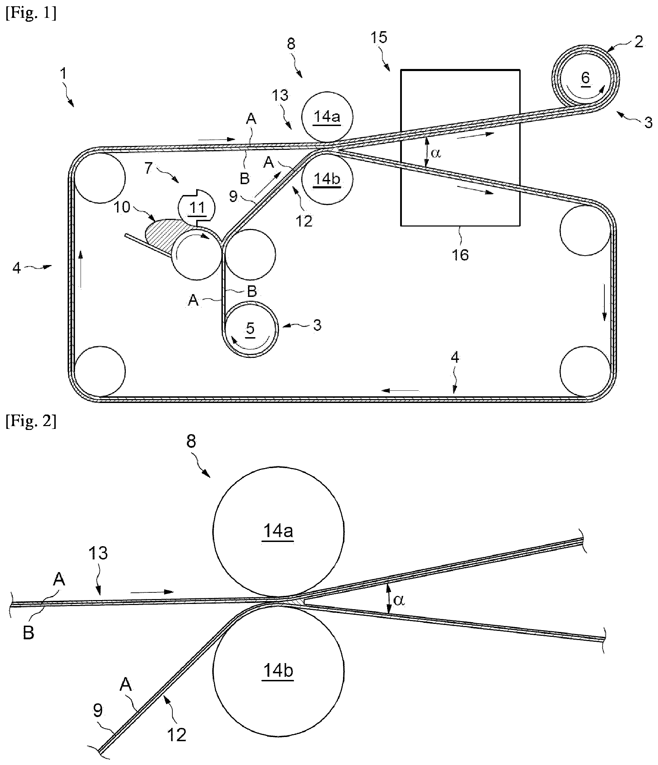

On a représenté sur la [Fig.1] un système 1 de fabrication en continu d'une électrode 2 selon un mode de réalisation de l'invention.

Le système 1 de fabrication comprend des moyens de défilement 3 continu d'un collecteur de courant 4 depuis une première bobine 5 située en amont vers une deuxième bobine 6 située en aval.

Le collecteur de courant 4 comprend une première face A et une seconde face B opposée à la première face A. Le collecteur de courant 4 est élaboré à partir d'une feuille ou d'un feuillard métallique. Par feuillard, on entend une plaque ou une bande formée de plusieurs films ou couches superposées. Par exemple, le collecteur de courant 4 est en cuivre ou en aluminium. Par exemple, le collecteur de courant 4 a une épaisseur allant de 5 µm à 25 µm.

Le système 1 de fabrication comprend des moyens de dépôt 7, 8 en continu d'encre sur le collecteur de courant 4.

Les moyens de dépôt 7 sont configurés pour déposer en continu une encre 9 sur la première face A du collecteur de courant 4 depuis un réservoir 10 d'encre. De préférence, les moyens de dépôt 7 comprennent un rouleau 11 équipé d'une lame doseuse permettant de régler l'épaisseur de la couche d'encre 9 déposée par enduction. De préférence, l'épaisseur de la couche d'encre 9 va de 50 µm à 400 µm.

L'encre 9 comprend au moins un solvant, un matériau actif et un liant polymérique permettant l'adhésion du matériau actif au collecteur de courant. Le solvant peut être organique ou aqueux. Le matériau actif peut être un matériau actif d'électrode positive ou d'électrode négative. De préférence, l'encre 9 comprend en outre un additif notamment carboné. En variante, il reste possible que l'encre 9 ne contienne pas un tel additif.

Par exemple, l'encre a une viscosité allant de 0,001 Pa.s à 10 Pa.s, et de préférence, une viscosité allant de 0,01 Pa.s à 10 Pa.s.

Les moyens de dépôt 8 sont configurés pour déposer en continu de l'encre 9 sur la seconde face B du collecteur de courant 4, par une enduction avec de l'encre 9 déjà déposée sur la première face A du collecteur de courant 4.

Les moyens de dépôt 8 se situent en aval des moyens de dépôt 7, dans le sens de défilement du collecteur 4.

Un tel système de fabrication permet de réduire le nombre de sources d'enduction dédiées. Ainsi, dans l'exemple illustré, il n'y a qu'une seule source d'enduction dédiée, à savoir le réservoir 10 d'encre.

L'enduction de la seconde face B est réalisée de manière à transférer de l'encre 9 déposée sur la première face A d'un premier segment 12 de collecteur, à la deuxième face B d'un deuxième segment 13 de collecteur situé en aval du premier segment dans le sens de défilement du collecteur de courant 4. De préférence, l'enduction de la seconde face permet de transférer environ la moitié de l'encre 9 déposée sur la première face A du premier segment 12 de collecteur à la seconde face B du deuxième segment 13 de collecteur. Une telle enduction permet d'assurer des couches d'encre déposée d'égale épaisseur entre les deux faces A et B, aux tolérances près. En variante, il reste possible que les couches d'encre déposée aient des épaisseurs différentes entre les deux faces A et B du collecteur de courant 4.

Il est à noter que bien que la première face A du premier segment 12 participe à l'enduction de la seconde face B du deuxième segment 13, elle ne constitue pas une source d'enduction dédiée.

De préférence, l'enduction est réalisée par un passage simultané des segments 12, 13 de collecteur entre deux rouleaux 14a, 14b associés. Les rouleaux 14a, 14b sont espacés d'une distance correspondant à la somme des épaisseurs des segments 12, 13, d'une épaisseur de couche d'encre séchée de la première face A du deuxième segment 13 et d'une demi-épaisseur de couche d'encre déposée sur la première face A du premier segment 12.

De préférence, la distance entre les rouleaux 14a, 14b peut être réglée pour tenir compte des tolérances de fabrication des différents éléments du système 1 de fabrication, de manière à maîtriser l'épaisseur de la couche d'encre 9 déposée sur les faces A, B du collecteur de courant 4.

Le système 1 de fabrication comprend en outre un dispositif de séchage 15 destiné à faire sécher l'encre 9 déposée sur le collecteur de courant 4 de manière à éliminer le solvant de l'encre 9. Le dispositif de séchage 15 se situe en aval des zones de dépôt d'encre, dans le sens de défilement du collecteur. Les zones de dépôt d'encre correspondent aux emplacements des moyens de dépôt 7 et 8.

De préférence, le dispositif de séchage 15 comprend un unique four 16 associé à un dispositif d'extraction d'air (non représenté). La température de l'enceinte du four 16 est réglée constante et va de 50 °C à 150 °C. En variante, en fonction de la dynamique de séchage voulue, il reste possible de prévoir une variation de température à l'intérieur de l'enceinte du four 16. En variante, il reste également possible de prévoir plusieurs fours 16.

Les deux segments 12, 13 du collecteur de courant 4 forment un angle de sortie α des deux rouleaux 14a, 14b allant de 5 à 45 degrés ([Fig.2]), afin de faciliter le décollement des deux segments du collecteur et de pouvoir les faire sécher dans un même four 16.

En variante, le système 1 de fabrication peut comprendre des moyens de calandrage et/ou de découpe (non illustrés) de l'électrode formée du collecteur de courant et du matériau actif.

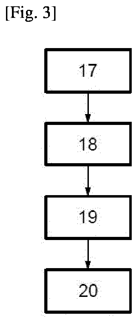

La [Fig.3] illustre un organigramme d'un procédé de fabrication en continu d'une électrode, selon un mode de réalisation de l'invention.

Bien que la [Fig.3] illustre des étapes successives, il est entendu que les étapes du procédé sont réalisées simultanément et en continu.

Le procédé comprend ainsi une étape 17 de défilement continu d'un collecteur de courant, une étape 18 de dépôt continu d'encre sur une première face A du collecteur, une étape 19 de dépôt continu d'encre sur une seconde face B du collecteur opposée à la première face A et une étape 20 de séchage en continu permettant d'obtenir une électrode.

Dans une étape ultérieure, l'électrode peut être calandrée. Cette étape permet de réduire la porosité de l'électrode pour améliorer son fonctionnement dans une batterie et d'augmenter sa densité d'énergie.

L'électrode formée du collecteur de courant et du matériau actif peut être bobinée et/ ou découpée aux dimensions désirées. Cette étape peut être réalisée dans le procédé à n'importe quel moment dès que le matériau actif a été déposé sur le collecteur de courant et dès que le solvant a été éliminé par le séchage. Par exemple, cette étape peut être réalisée avant ou après le calandrage. De préférence, les étapes de découpage et/ou de bobinage sont réalisées après l'étape de calandrage.

## Revendications

1. Procédé de fabrication en continu d'une électrode (2) comprenant les étapes suivantes réalisées simultanément et en continu :
- défilement continu d'un collecteur de courant (4), ledit collecteur de courant ayant une première face (A) et une seconde face (B) opposée à la première face (A),
- dépôt en continu d'une encre (9) sur la première face (A) du collecteur de courant (4) depuis un réservoir (10) d'encre (9), ladite encre comprenant au moins un solvant et un matériau actif,
- dépôt en continu d'encre (9) sur la seconde face (B) du collecteur de courant (4),
- séchage en continu de l'encre (9) déposée pour éliminer le solvant, par un dispositif de séchage (15),
**caractérisé en ce que** le dépôt d'encre sur la seconde face (B) du collecteur (4) est réalisé par une enduction avec de l'encre déposée sur la première face (A) du collecteur (4).

2. Procédé selon la revendication 1, dans lequel l'enduction de la seconde face B est réalisée de manière à transférer la moitié de l'encre déposée sur la première face (A) d'un premier segment (12) de collecteur à la deuxième face (B) d'un deuxième segment (13) de collecteur situé en aval du premier segment (12) dans le sens de défilement du collecteur (4).

3. Procédé selon la revendication 2, dans lequel l'enduction de la seconde face (B) est réalisée par un passage simultané desdits segments (12, 13) du collecteur entre deux rouleaux (14a, 14b) espacés d'une distance correspondant à la somme des épaisseurs des segments (12, 13), d'une épaisseur de couche d'encre séchée de la première face (A) du deuxième segment (13) et d'une demi-épaisseur de couche d'encre déposée sur la première face (A) du premier segment (12).

4. Procédé selon la revendication 3, dans lequel les deux segments (12, 13) du collecteur (4) forment un angle de sortie (α) des deux rouleaux (14a, 14b) allant de 5 à 45 degrés.

5. Procédé selon l'une quelconque des revendications précédentes, dans lequel le dépôt d'encre sur la première face (A) du collecteur de courant (4) est réalisé par enduction à l'aide d'une lame doseuse.

6. Procédé selon l'une quelconque des revendications précédentes, dans lequel la couche d'encre déposée a une épaisseur allant de 50 µm à 400 µm.

7. Procédé selon l'une des revendications précédentes, dans lequel le dispositif de séchage (15) se situe en aval des zones de dépôt d'encre, dans le sens de défilement du collecteur.

8. Procédé selon l'une quelconque des revendications précédentes, dans lequel l'encre (9) a une viscosité allant de 0,001 Pa.s à 10 Pa.s.

9. Système de fabrication en continu d'une électrode (2) comprenant :
- des moyens de défilement (3) continu d'un collecteur de courant (4), ledit collecteur de courant ayant une première face (A) et une seconde face (B) opposée à la première face (A),
- des moyens de dépôt (7) en continu d'une encre (9) sur la première face (A) du collecteur de courant (4) depuis un réservoir (10) d'encre (9), ladite encre comprenant au moins un solvant et un matériau actif,
- des moyens de dépôt (8) en continu d'encre (9) sur la seconde face (B) du collecteur de courant (4),
- un dispositif de séchage (15) en continu de l'encre déposée sur le collecteur de courant (4) pour éliminer le solvant,
**caractérisé en ce que** le dépôt d'encre sur la seconde face (B) du collecteur est réalisé par une enduction avec de l'encre déposée sur la première face (A) du collecteur.

10. Système selon la revendication 9, dans lequel le dispositif de séchage (15) comprend un unique four (16) associé à un dispositif d'extraction d'air.

## Patentansprüche

1. Verfahren zur kontinuierlichen Herstellung einer Elektrode (2), welches die folgenden Schritte umfasst, die gleichzeitig und kontinuierlich durchgeführt werden:
- kontinuierlicher Durchlauf eines Stromkollektors (4), wobei der Stromkollektor eine erste Seite (A) und eine der ersten Seite (A) gegenüberliegende zweite Seite (B) aufweist,
- kontinuierliches Aufbringen einer Tinte (9) auf die erste Seite (A) des Stromkollektors (4) aus einem Behälter (10) mit Tinte (9), wobei die Tinte mindestens ein Lösungsmittel und ein Aktivmaterial umfasst,
- kontinuierliches Aufbringen von Tinte (9) auf die zweite Seite (B) des Stromkollektors (4),
- kontinuierliches Trocknen der aufgebrachten Tinte (9), um das Lösungsmittel zu entfernen, durch eine Trocknungsvorrichtung (15),
**dadurch gekennzeichnet, dass** das Aufbringen von Tinte auf die zweite Seite (B) des Kollektors (4) durch eine Beschichtung mit Tinte, die auf die erste Seite (A) des Kollektors (4) aufgebracht wurde, durchgeführt wird.

2. Verfahren nach Anspruch 1, wobei die Beschichtung der zweiten Seite (B) so durchgeführt wird, dass die Hälfte der Tinte, die auf die erste Seite (A) eines ersten Kollektorsegments (12) aufgebracht wurde, auf die zweite Seite (B) eines zweiten Kollektorsegments (13) übertragen wird, das in der Durchlaufrichtung des Kollektors (4) nach dem ersten Segment (12) angeordnet ist.

3. Verfahren nach Anspruch 2, wobei die Beschichtung der zweiten Seite (B) durch einen gleichzeitigen Durchgang der Segmente (12, 13) des Kollektors zwischen zwei Walzen (14a, 14b) durchgeführt wird, die um einen Abstand beabstandet sind, welcher der Summe der Dicken der Segmente (12, 13), einer Dicke der getrockneten Tintenschicht der ersten Seite (A) des zweiten Segments (13) und einer halben Dicke der auf die erste Seite (A) des ersten Segments (12) aufgebrachten Tintenschicht entspricht.

4. Verfahren nach Anspruch 3, wobei die zwei Segmente (12, 13) des Kollektors (4) einen Austrittswinkel (α) aus den zwei Walzen (14a, 14b) bilden, der 5 bis 45 Grad beträgt.

5. Verfahren nach einem der vorhergehenden Ansprüche, wobei das Aufbringen von Tinte auf die erste Seite (A) des Stromkollektors (4) durch Beschichtung mithilfe eines Dosiermessers durchgeführt wird.

6. Verfahren nach einem der vorhergehenden Ansprüche, wobei die aufgebrachte Tintenschicht eine Dicke von 50 µm bis 400 µm aufweist.

7. Verfahren nach einem der vorhergehenden Ansprüche, wobei die Trocknungsvorrichtung (15) in der Durchlaufrichtung des Kollektors nach den Bereichen des Aufbringens von Tinte angeordnet ist.

8. Verfahren nach einem der vorhergehenden Ansprüche, wobei die Tinte (9) eine Viskosität von 0,001 Pa.s bis 10 Pa.s aufweist.

9. System zur kontinuierlichen Herstellung einer Elektrode (2), umfassend:
- Mittel zum kontinuierlichen Durchlauf (3) eines Stromkollektors (4), wobei der Stromkollektor eine erste Seite (A) und eine der ersten Seite (A) gegenüberliegende zweite Seite (B) aufweist,
- Mittel zum kontinuierlichen Aufbringen (7) einer Tinte (9) auf die erste Seite (A) des Stromkollektors (4) aus einem Behälter (10) mit Tinte (9), wobei die Tinte mindestens ein Lösungsmittel und ein Aktivmaterial umfasst,
- Mittel zum kontinuierlichen Aufbringen (8) von Tinte (9) auf die zweite Seite (B) des Stromkollektors (4),
- eine Vorrichtung zum kontinuierlichen Trocknen (15) der auf den Stromkollektor (4) aufgebrachten Tinte, um das Lösungsmittel zu entfernen,
**dadurch gekennzeichnet, dass** das Aufbringen von Tinte auf die zweite Seite (B) des Kollektors durch eine Beschichtung mit Tinte, die auf die erste Seite (A) des Kollektors aufgebracht wurde, durchgeführt wird.

10. System nach Anspruch 9, wobei die Trocknungsvorrichtung (15) einen einzigen Ofen (16) umfasst, der einer Luftabsaugvorrichtung zugeordnet ist.

## Claims

1. Method for continuously manufacturing an electrode (2), comprising the following steps carried out simultaneously and continuously:
- continuously moving a current collector (4), said current collector having a first face (A) and a second face (B) opposite the first face (A),
- continuously depositing an ink (9) on the first face (A) of the current collector (4) from a reservoir (10) of ink (9), said ink comprising at least one solvent and one active material,
- continuously depositing ink (9) on the second face (B) of the current collector (4),
- continuously drying the deposited ink (9) to remove the solvent, using a drying device (15),
**characterized in that** ink is deposited on the second face (B) of the collector (4) by coating with ink deposited on the first face (A) of the collector (4).

2. Method according to Claim 1, wherein the second face B is coated so as to transfer half of the ink deposited on the first face (A) of a first collector segment (12) to the second face (B) of a second collector segment (13) situated downstream of the first segment (12) in the direction of movement of the collector (4).

3. Method according to Claim 2, wherein the second face (B) is coated by simultaneous passage of said segments (12, 13) of the collector between two rollers (14a, 14b) that are spaced apart by a distance corresponding to the sum of the thicknesses of the segments (12, 13), a thickness of a dried ink layer of the first face (A) of the second segment (13) and a half-thickness of a layer of ink deposited on the first face (A) of the first segment (12).

4. Method according to Claim 3, wherein the two segments (12, 13) of the collector (4) form an output angle (α) from the two rollers (14a, 14b) that ranges from 5 to 45 degrees.

5. Method according to any one of the preceding claims, wherein ink is deposited on the first face (A) of the current collector (4) by coating using a metering blade.

6. Method according to any one of the preceding claims, wherein the deposited ink layer has a thickness ranging from 50 µm to 400 µm.

7. Method according to one of the preceding claims, wherein the drying device (15) is situated downstream of the ink deposition zones, in the direction of movement of the collector.

8. Method according to any one of the preceding claims, wherein the ink (9) has a viscosity ranging from 0.001 Pa.s to 10 Pa.s.

9. System for continuously manufacturing an electrode (2), comprising:
- means (3) for continuously moving a current collector (4), said current collector having a first face (A) and a second face (B) opposite the first face (A),
- means (7) for continuously depositing an ink (9) on the first face (A) of the current collector (4) from a reservoir (10) of ink (9), said ink comprising at least one solvent and one active material,
- means (8) for continuously depositing ink (9) on the second face (B) of the current collector (4),
- a device (15) for continuously drying the ink deposited on the current collector (4) to remove the solvent,
**characterized in that** ink is deposited on the second face (B) of the collector by coating with ink deposited on the first face (A) of the collector.

10. System according to Claim 9, wherein the drying device (15) comprises a single oven (16) associated with an air extraction device.
